# EUROPEAN PATENT APPLICATION

(11) **EP 1 169 957 A1**
(43) Date of publication of application: **09.01.2002**
(21) Application number: 00830452.9
(22) Date of filing: 26.06.2000
(51) Int. Cl.: A47J 31/54

(54) **Disposable device to make coffee in a microwave oven or similar apparatus and method for its production**

(71) Applicant: Pizzuto, Aldo, 86100 Campobasso (CB) (IT); Innocenti, Carlo, 52027 S. Giovanni Valdarno (AR) (IT)
(72) Inventor: Pizzuto, Aldo, 86100 Campobasso (CB) (IT); Innocenti, Carlo, 52027 S. Giovanni Valdarno (AR) (IT)
(74) Representative: Celestino, Marco

(57) **Abstract**

For making coffee in a microwave oven (1) a disposable device or coffee percolator (2) is provided. It requires simply to be put into oven for a time and power predetermined, with the direct production of espresso coffee. The coffee percolator (2) comprises a container (3) of water, a coffee cartridge or mixture of other type, such as for example roasted barley etc.; a metal coating in the cartridge, for shielding the coffee in it contained by the microwaves made by the oven; an element comprising a duct for conveying the water heated at pressure towards the inlet of the cartridge; a separation wall that can be perforated, for example in aluminium; a cup (9), for receiving coffee that comes out from the cartridge. The disposable coffee percolator (2) is closed in a package that protects it and assures the conservation of coffee in it contained, preferably in an environment at modified atmosphere or at a certain vacuum rate. Once removed from the package, the percolator is introduced in the microwave oven (1) where the water is heated so that the pressure in the container rises. The pressure creates a relative movement of a sharp element that causes thus the break of the metal film. The water pushed towards the above as in a normal coffee percolator goes up the duct and is conveyed towards the inlet of the cartridge, thus flooding the coffee in it contained. Finally, the mixture comes out by a upper filter, filling the cup (9) of the coffee percolator (2).

## Description

### Field of the invention

The invention described below refers to a disposable device to make coffee or other similar beverages in a microwave oven.

Furthermore, it relates to a method for the providing a disposable coffee percolator that can be operated by microwave ovens.

### Background of the invention

It is common to drink hot beverages both at home and in places such as at work, in public shops etc.

Among hot drinks, coffee is one of the most usual. For its preparation, different methods and apparatus can be used: traditional coffee percolators, coffee machines for pubs, automatic coffee vending machines or freeze-dried coffee dissolved in hot water.

It is also common to use microwaves ovens, by which cooking or simply heating meals or drinks is possible. Such ovens are in particular widespread in refreshment-rooms of offices for heating food and beverages during the breaks.

In addition, it is also possible to prepare coffee, for example as described in EP0455239, by means of percolators specifically designed for use in microwave ovens.

It is also known that it is difficult to find fresh espresso coffee to drink when travelling, for example by train or by airplane, where usually the assistants for practical reasons make coffee before leaving by means of the above described techniques. All that causes an alteration of taste of the coffee at the moment of drinking it.

### Summary of the invention

It is therefore object of the present invention to provide a disposable device to make coffee or other similar beverages, that does not present the drawbacks of existing methods, and that in particular:
- is quickly available to the user in a compact, not much cumbersome way and without making dirt;
- allows to make coffee quickly;
- allows to reduce the risks due to traditional techniques, such as for example the use of flames;
- allows a common use also in places wherein to get espresso coffee is much more difficult, for example on train or on airplane;
- is much cleaner especially in places where to get clean cups is not easy;
- is a product of low cost.

In the following description reference is made to making coffee, being it clear that this method can be extended also to making other similar beverages, for example barley and other roasted mixtures.

It is another object of the invention to provide a method for the providing disposable percolators in mass industrial production.

According to a first aspect of the invention a disposable device to make coffee by means of microwave oven has the characteristic that it comprises:
- a water container;
- a coffee cartridge, having an inlet and an outlet for boiling water;
- means for conveying the boiling water from the container towards the inlet;
- a separation wall suitable for being perforated at the moment of the use, for allowing the passage of water towards the coffee cartridge;
- a cup for receiving the coffee that comes out from the cartridge.

The disposable device to make coffee according to the invention is made of plastic material for food, such as for example polypropylene, polyethylene, polycarbonate etc., that are known as transparent to microwaves.

The separation wall can be perforated at the moment of the use manually by the user or automatically by the water pressure same.

In the latter case, means are provided to break the separation wall operated by the water pressure in the container.

The means for conveying the water comprise advantageously a funnel-shaped element, being the funnel formed by a plate from which a through duct extends oriented towards the bottom of the container. The plate concavity is oriented towards the top of the inlet of the cartridge. The separation wall blocks the duct at the plate.

The plate, in an advantageous embodiment, is flexible under the water pressure when heating, and a sharp element is provided associated to the cartridge to perforate the separation wall when the water pressure in the container increases. The cartridge in this case is integrated with the cup.

Alternatively, the cartridge may be screw connected to the funnel, the lock at the moment of the use of the cartridge causing the break of the separation wall.

The cup, the funnel and the container have a flanged edge whereby they can be welded to one another for forming the integral body of a coffee percolator.

In particular, the funnel and the container can be integrated to each other. In this case the plate has holes for introduction of the water at the production stage and the separation wall blocks both the duct and the holes.

Alternatively, the container and the cup are integrated in a single body and the funnel is inserted in it.

The cartridge may have a inner metal coating film and filter elements at the inlet and the outlet. The metal film has the function of shielding microwaves to protect the coffee aroma when the water is heated.

The use of the device according to the invention provides the steps of:
- opening a package containing the percolator, this package protecting the percolator for assuring the conservation of coffee in modified or vacuum environment;
- introducing the coffee percolator in a microwave oven and turning on the oven; the water contained inside the percolator increases quickly the temperature by means of the excitation given by the oven radiations;
- pushing action towards the above of the flexible funnel owing to the water pressure;
- piercing the film that seals the funnel, for example made of aluminium, under the action of the water pressure by a sharp element located below the coffee cartridge;
- boiling of water, that pushed by the vapour goes up the funnel, crosses the opening that was closed by the film and floods the coffee;
- pouring out of the coffee, pushed by the pressure in the percolator, and filling the cup of the percolator.

A method for the providing a coffee percolator provides:
- providing a cartridge containing coffee and coated inside with material substantially impermeable to microwaves, said cartridge having an inlet and an outlet;
- providing a water container having means for conveying the water in pressure from the container towards the inlet of the cartridge;
- providing a cup for containing the coffee made;
- filling the container with water;
- applying a closure film that can be perforated for blocking the means for conveying the water;
- arranging said cartridge and said cup onto said container and welding the cup to the container.

According to different alternative embodiments of the method:
- the container and the cup can be made in a single part;
- the means for conveying the water in pressure from the container towards the inlet can be made in two parts distinct from each other;
- the film that can be perforated can be applied to the cartridge and not to the container.

### Brief description of the drawings

Further characteristics of the disposable device to make coffee and of the method for its production according to the present invention, will be made clearer with the following description of an embodiment thereof, exemplifying but not limitative, with reference to the attached drawings, wherein:
- figure 1 shows a perspective view of a disposable device according to the invention to make coffee put into a microwave oven;
- figure 2A shows a cross sectional view of a first embodiment of the device according to the invention, with the container of the water and funnel integrated to each other, and in figures 2B-2D the parts are shown that make them up;

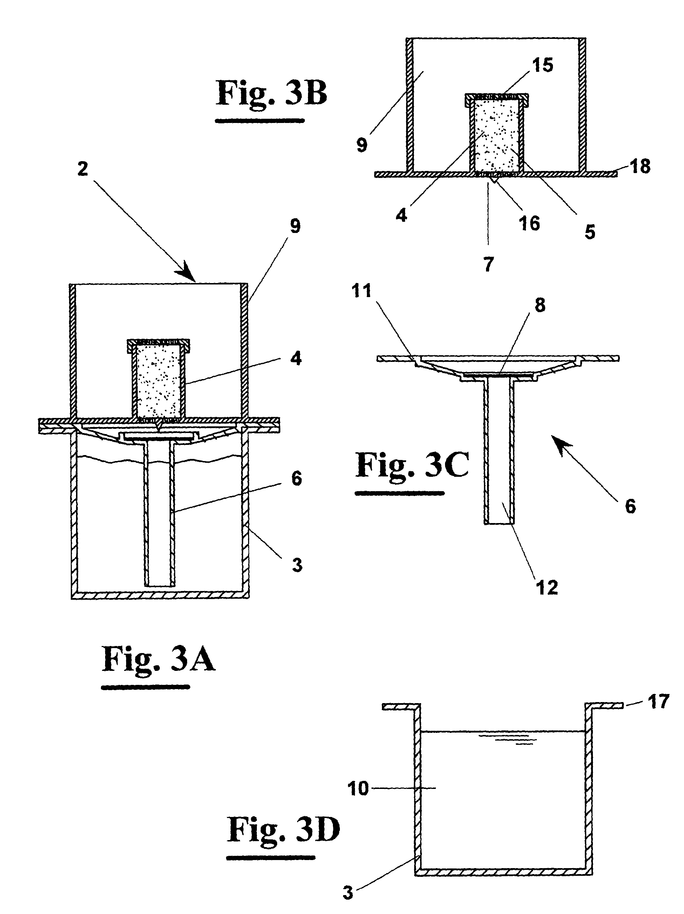

- figure 3A represents a cross sectional view of a second embodiment of the device according to the invention, with the container of the water and funnel distinct from each other, and in figures 3B-3D the parts are shown that make them up;

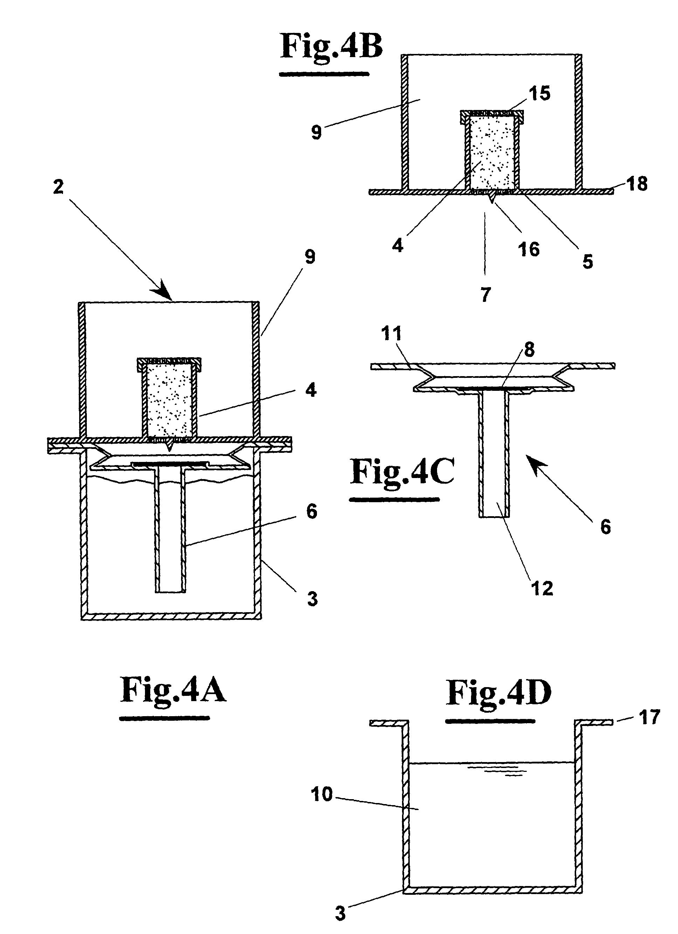

- figure 4A represents a cross sectional view of a third embodiment of the device according to the invention and in figures 43-4D the parts are shown that make them up;
- figure 5A represents a cross sectional view of a fourth embodiment of the device according to the invention, with cup and container of the water integrated to each other, and in figures 5B-3D the parts are shown that make them up.
- Figure 6 represents a cross sectional enlarged view of a coffee cartridge similar to that of figures 2C, 3B, 4B and 5B, wherein the filter element for coffee and the microwaves metal shielding are clearly shown.

### Description of a preferred embodiment

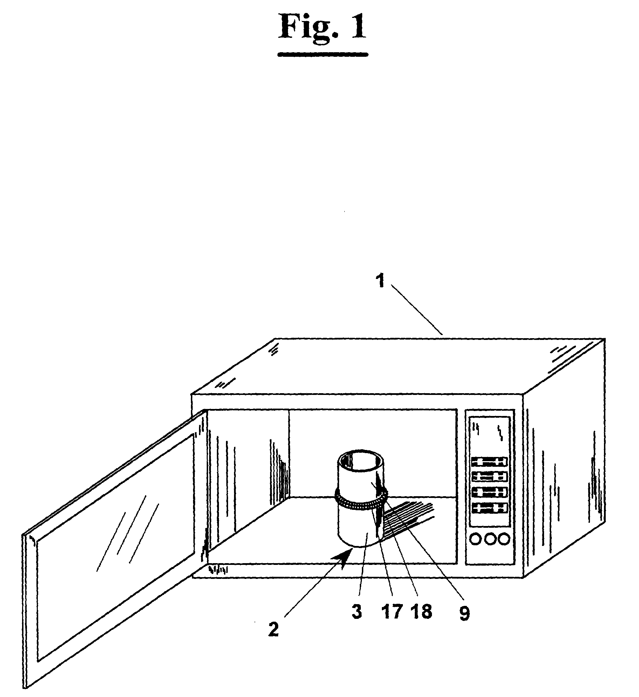

With reference to figure 1, to make coffee in a microwave oven 1, a disposable device or coffee percolator 2 is provided. It requires simply to be put into the oven for predetermined time and power, with the production direct of espresso coffee.

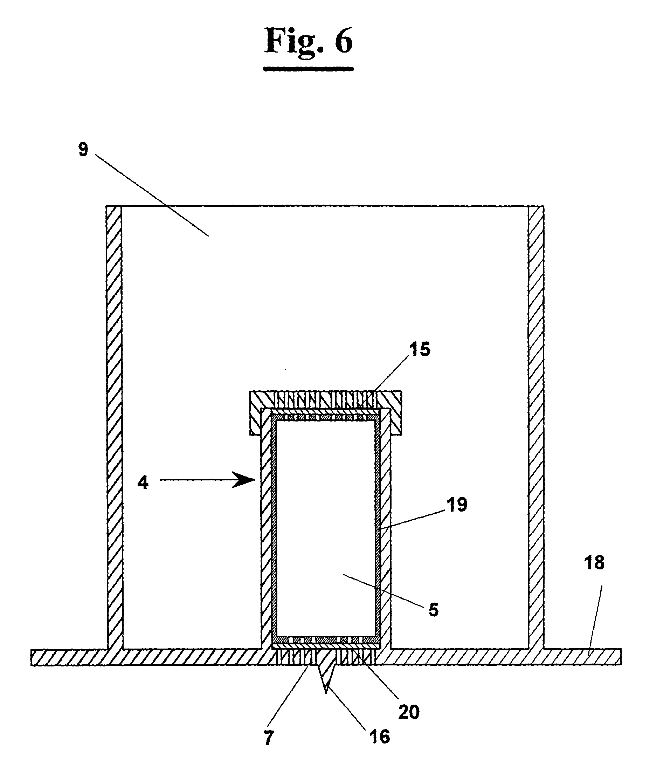

In a first embodiment, the disposable coffee percolator 2 comprises the following elements;
- a container 3 of water 10;
- a cartridge 4 of coffee 5 or mixture of other type, such as for example roasted barley etc.;
- a metal coating 19 (figure 6) in the cartridge 4, for shielding coffee 5 in it contained by the microwaves made by the oven.
- an element 6 for conveying water 10 heated under pressure towards inlet 7 of the cartridge 4, comprising a duct 12;
- a separation wall 8 that can be perforated, for example in aluminium;
- a cup 9, for receiving coffee that comes out from the cartridge 4.

The disposable coffee percolator 2 is closed in a package not shown that protects it and assures the conservation of coffee in it contained, preferably in an environment at modified atmosphere or with a certain vacuum rate. Once removed the package, the percolator is introduced in the microwave oven 1 where water 10 is heated until the pressure in container 3 rises. In particular, element 6 for conveying water 10 is preferably funnel shaped with a flexible plate 11 from which the through duct extends 12 oriented towards the bottom of the container 3. Furthermore plate 11 has concavity oriented towards inlet 7 of cartridge 4 of coffee 5 and is separated from duct 12 by separation wall 8, of aluminium film.

The rise of the pressure in container 3 causes plate 11 of the funnel to deform towards inlet 7 of cartridge 4 against a sharp element 16 that extends from the cartridge towards below. Sharp element 16 causes then of metal film 8 to break. Once metal film 8 a is torn, the pressure in chamber 3 is lowered bringing back the funnel to the starting position. The water 10, pushed towards the above as in a normal coffee percolator, goes up duct 12 and is conveyed towards inlet 7 of cartridge 3 flooding the coffee 5 in it contained. Finally, the mixture comes out by a upper cover filter 15, filling cup 9 of coffee percolator 2.

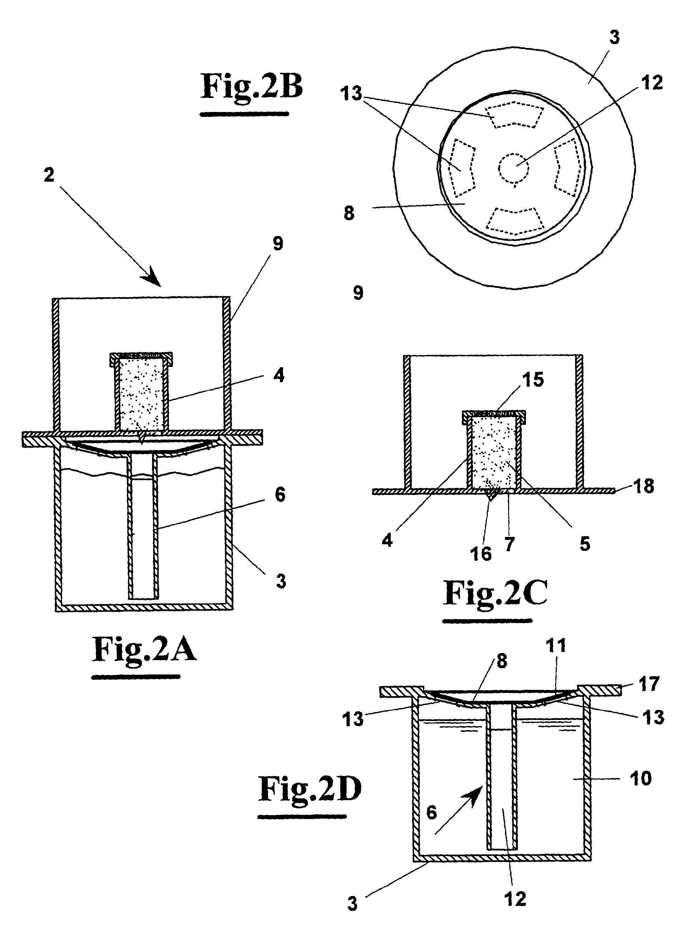

As shown in figures 2A and 2D, container 3 of water 10 and the element 6 for conveying the water are integrated in a single element. The same has been made for cup 9 and cartridge 4 of coffee 5 of figures 2A and 2C that are integrated to each other. In the manufacturing stage, container 3 is made in one part, with advantages of production and assembling. Plate 11 has advantageously holes 13 that allow a quick inlet of the water in direct phase of production.

Container 3 and cup 9 have a flanged edge 17 and 18 that after the filling of water and the application of film 8 are heat welded.

With reference to figures from 3A to 3D, in a second embodiment of the invention, still remaining the other characteristics of the previous figures, container 3 of water 10 and element 6 for conveying the water are distinct from each other, with advantages in simplicity of moulding and filling the cup by water. Plate 11 is separated from container 3 and extends to match flanges 17 and 18.

With reference to figures from 4A to 4D, in a different embodiment of the invention plate 11 is made accordion like for higher flexibility and for assuring that the conic end 16 is reached by aluminium film 8.

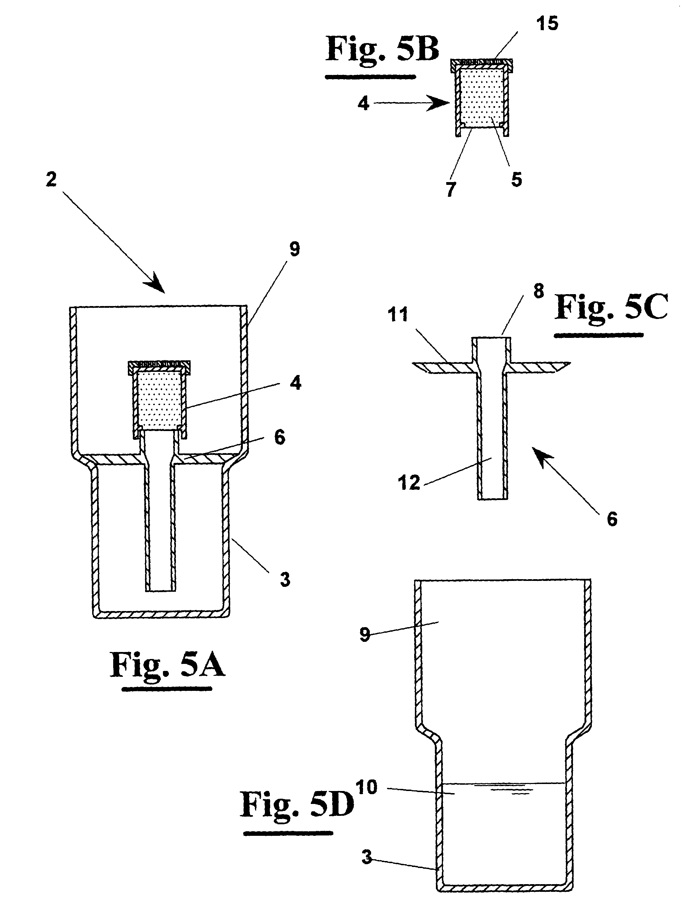

In a fourth embodiment of the invention, the coffee cartridge of figure 5A is an element different from cup 9 and container 3, which are instead integrated in a single part. Cartridge 4, in particular, can be screwed on funnel-shaped plate 11. This way, the user can perforate the film 8 of aluminium when screwing cartridge 4 onto funnel-shaped plate 11.

In particular, with reference to figure 6, still remaining the other characteristics of the disposable coffee percolator 2, cartridge 4 of coffee 5 is coated inside by a metal film 19 that shields coffee 5 from microwaves and avoids thus that it is burnt. Furthermore, paper filters 20 are provided at the inlet and the outlet for avoid that coffee is spilled towards below or towards the above.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A disposable device to make coffee in a microwave oven **characterised in that** it comprises:
- a water container;
- a coffee cartridge, having an inlet and an outlet for boiling water;
- means for conveying said boiling water from said container towards said inlet;
- a separation wall suitable for being perforated at the moment of the use, for allowing the passage of water towards said cartridge;
- a cup for receiving coffee that comes out from said outlet.

2. Device disposable according to claim 1, wherein means are provided to break said separation wall operated by the pressure of the boiling water in said container.

3. Device according to claim 1, wherein said means for conveying comprise a funnel-shaped element, said funnel being formed by a plate from which a through duct extends oriented towards the bottom of the container, said plate having concavity oriented towards the inlet of said cartridge.

4. Device according to claim 1 and 2 wherein said separation wall blocks said duct at said plate, the latter being flexible under the water pressure when heating, a sharp element being provided associated to said cartridge to perforate said separation wall when the water pressure in the container increases.

5. Device according to the previous claims wherein said cartridge is integrated with said cup.

6. Device according to claims from 1 to 4 wherein said cartridge is coupled to said funnel, the tightening at the moment of the use of said cartridge causing the break of said separation wall.

7. Device according to claims from 3 to 5 wherein said cup, said funnel and said container have flanged edges that can be welded together for forming an integral body of a coffee percolator.

8. Device according to claims from 3 to 5 wherein said funnel and said container are integrated to each other, said plate having holes for introduction of the water at the manufacturing stage, said separation wall closing both said duct and said holes.

9. Device according to claim 6 wherein said container and said cup are integrated in a single body.

10. Device according to the previous claims wherein said cartridge has an inner metal coating film and filter elements at said inlet and said outlet.

11. Method to provide a disposable device for making coffee in a microwave oven, **characterised in that** it comprises the steps of:
- Arranging a container for water, a funnel-shaped element and a cup integrated to a cartridge containing coffee;
- Filling the water container and closing the funnel by means of a film that can be perforated at use;
- Applying the cup onto the container integral to the funnel to form a single body.
